# FASCICULE DE BREVET EUROPEEN

(11) **EP 4 476 476 B1**
(45) Date de publication et mention de la délivrance du brevet: **25.11.2026**
(21) Numéro de dépôt: 22823531.3
(22) Date de dépôt: 01.12.2022
(51) Int. Cl.: F17C 7/04

(54) **DISPOSITIF ET PROCÉDÉ DE STOCKAGE ET DE FOURNITURE DE FLUIDE**
VORRICHTUNG UND VERFAHREN ZUR SPEICHERUNG UND BEREITSTELLUNG VON FLUID
DEVICE AND METHOD FOR STORING AND SUPPLYING FLUID

(30) Priorité: 10.02.2022 FR 2201169
(43) Date de publication de la demande: 18.12.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BRAVAIS, Patrick, 38360 Sassenage (FR); BOURGEOIS, Philippe, 38360 Sassenage (FR); CORRADO, Gregory, 38360 Sassenage (FR); CARPENTIER, Simon, 38360 Sassenage (FR)
(74) Mandataire: Air Liquide
(86) Numéro de dépôt international: PCT/EP2022/083990
(87) Numéro de publication internationale: WO 2023/151845

(56) Documents cités:
- EP-A2- 1 035 368
- FR-A1- 2 706 822
- US-A1- 2009 288 426
- US-A1- 2018 306 383
- US-B2- 9 746 132

## Description

L'invention concerne un dispositif et un procédé de stockage et de fourniture de fluide.

L'invention concerne plus particulièrement un dispositif de stockage et de fourniture de fluide, notamment dispositif embarqué de stockage et de fourniture d'hydrogène à un organe utilisateur, comprenant un réservoir cryogénique de stockage de fluide liquéfié, un circuit de soutirage comprenant une première conduite de soutirage ayant une première extrémité amont reliée à l'intérieur du réservoir et une seconde extrémité aval destinée à être reliée à un organe utilisateur, la première conduite de soutirage comprenant un premier échangeur de chaleur de réchauffage situé en dehors du réservoir, le circuit de soutirage comprenant un ensemble de vanne(s) configuré pour autoriser ou non le soutirage d'un flux de fluide de la première extrémité vers la seconde extrémité en passant dans le premier échangeur de chaleur, le dispositif comprenant un organe électronique de contrôle et de commande de l'ouverture/fermeture d'au moins une partie de l'ensemble de vannes.

Les dispositifs de stockage d'hydrogène liquéfié prévus pour alimenter un utilisateur (pile à combustible, moteur à combustion, turbine ou autre) incluent habituellement : un réservoir à isolation double enveloppe sous vide (avec de la super-isolation et/ou de la perlite dans l'espace sous vide pour avoir une autonomie suffisante sans consommation), une ligne de remplissage (inférieure et/ou en pluie), une ligne de soutirage pouvant prélever le gaz ou le liquide (ou les deux) avec un échangeur de chaleur externe pour réchauffer l'hydrogène à température ambiante, une ligne de sécurité (avec soupapes et/ou disques de rupture par exemple), éventuellement des piquages de prise de pression et un système de pressurisation du réservoir.

Le système de pressurisation du réservoir peut avoir deux fonctions : une première fonction de pré-pressurisation avant l'utilisation du fluide, par exemple si le réservoir est rempli entre 1 et 2 bar et que l'utilisateur a besoin d'une source de pression entre typiquement 4 et 6 bar (ou plus) pour le fonctionnement de sa pile ou de son moteur, ou une seconde fonction de maintien en pression durant l'utilisation de l'hydrogène. A noter que le besoin en puissance du réchauffeur est plus important si le soutirage est réalisé dans la phase gazeuse par rapport à un soutirage dans la phase liquide.

Les systèmes de pressurisation (aussi appelé « PBU » pour « Pressure Building Unit » en anglais qui signifie « unité d'édification de pression ») peuvent être de plusieurs types.

Par exemple, ces systèmes peuvent comprendre : un réchauffeur électrique immergé dans le réservoir cryogénique, une boucle fluide de réchauffage autonome (avec une pompe de circulation) mis en échange thermique avec le réservoir, un dispositif de type thermosiphon avec un évaporateur externe (cas des citernes de livraison mobile par exemple), une boucle de recirculation utilisant le fluide soutiré par l'utilisateur qui passe dans un échangeur externe, revient via une boucle de recirculation interne dans le réservoir pour céder de la chaleur et repasse dans l'échangeur externe avant de partir dans le circuit utilisateur (cf. par exemple FR2706822A), un dispositif qui vaporise du liquide dans un échangeur externe et qui revient par surpression dans le réservoir.

Un système de réchauffage électrique est le plus simple mais il est intrusif et sa fiabilité à long terme peut être limitée. De plus, il nécessite des traversées de paroi avec des organes électriques.

Un système par recirculation autonome demande des équipements annexes (pompe de recirculation et source d'énergie ou source de pression de gaz chaud).

La solution avec thermosiphon oblige à mettre des vannes cryogéniques et des traversées de paroi sous vide pour la ligne de recirculation qui, lorsqu'elle est en utilisation, voit de l'hydrogène liquide et gazeux proche de la saturation (-253°C a 1 bar).
La solution avec échangeur externe et boucle de recirculation est simple et fiable donc très satisfaisante pour assurer le maintien en pression mais présente l'inconvénient de ne pouvoir réaliser la fonction de pré-pressurisation avant un soutirage. Un but de la présente invention est de pallier tout ou partie des inconvénients de l'art antérieur relevés ci-dessus.
A cette fin, le dispositif selon l'invention, par ailleurs conforme à la définition générique qu'en donne le préambule ci-dessus, est essentiellement caractérisé en ce que, lorsque l'ensemble de vannes est configuré pour ne pas autoriser de soutirage de fluide vers la seconde extrémité aval, l'organe électronique de contrôle et de commande est configuré pour commuter l'ensemble de vannes dans au moins deux états distincts : dans un premier état, au moins une partie du volume interne du premier échangeur de chaleur de réchauffage est isolé fluidiquement d'au moins une partie du reste du circuit de soutirage pour favoriser une onde de pression spontanée dans le circuit de soutirage de façon à pressuriser le fluide dans le réservoir, dans un second état, au moins une partie du volume de l'échangeur de chaleur de réchauffage communique fluidiquement avec au moins une partie du reste du circuit de soutirage pour amortir une telle onde de pression dans le circuit.
Par ailleurs, des modes de réalisation de l'invention peuvent comporter l'une ou plusieurs des caractéristiques suivantes :
- le passage du premier état vers le second état est obtenu par l'ouverture d'au moins une vanne de l'ensemble de vannes,
- le passage du second état vers le premier état est obtenu par la fermeture d'au moins une vanne de l'ensemble de vannes,
- le passage du premier état vers le second, respectivement du second état vers le premier état, est obtenu par l'ouverture, respectivement la fermeture, de deux vannes d'isolation de l'ensemble de vannes qui sont situées respectivement à deux extrémités du premier échangeur de chaleur,
- dans le premier état, au moins un passage interne du premier échangeur situé entre une entrée et une sortie de l'échangeur est mis en relation fluidique avec un ensemble de tuyauterie du circuit de soutirage et en ce que, dans le second état, ledit passage interne du premier échangeur est isolé fluidiquement dudit ensemble de tuyauterie du circuit de soutirage,
- la première conduite de soutirage comprend un second échangeur de chaleur de réchauffage situé à l'intérieur du réservoir, l'ensemble de vanne(s) étant configuré pour assurer le passage d'un flux de fluide circulant de la première extrémité vers la seconde extrémité en passant dans le premier échangeur de chaleur puis dans le second échangeur de chaleur ou en passant uniquement dans le premier échangeur de chaleur sans passer dans le second échangeur de chaleur,
- le second échangeur de chaleur fait partie du reste du circuit de soutirage qui est isolé fluidiquement ou non du premier échangeur de chaleur de réchauffage selon que l'ensemble de vanne(s) est dans le premier état ou le second état,
- dans le premier état, le circuit de soutirage comprend une portion formant une boucle de circulation de fluide tandis que dans le second état le circuit de soutirage ne comprend pas de portion formant une boucle de circulation de fluide,
- le circuit de soutirage comprend une ligne principale s'étendant entre la première extrémité amont et la seconde extrémité aval et une branche de dérivation de la ligne principale formant raccordées à deux endroits distincts de la ligne principale,
- la première extrémité amont est reliée à la partie supérieure du réservoir,
- l'ensemble de vanne(s) comprend au moins l'un parmi : une ou plusieurs vannes d'isolation, une ou plusieurs vannes à trois voies.

L'invention concerne également un véhicule, notamment bateau ou avion comprenant un tel dispositif.

L'invention concerne également un procédé de stockage d'un fluide cryogénique, par exemple de l'hydrogène liquide, dans un dispositif de stockage et de fourniture de fluide comprenant un réservoir de fluide cryogénique liquéfié, un circuit de soutirage comprenant une première conduite de soutirage ayant une première extrémité amont reliée à l'intérieur du réservoir et une seconde extrémité aval destinée à être reliée à un organe utilisateur, la première conduite de soutirage comprenant un premier échangeur de chaleur de réchauffage situé en dehors du réservoir, le circuit de soutirage comprenant un ensemble de vanne(s) configuré pour réaliser ou non le soutirage d'un flux de fluide de la première extrémité vers la seconde extrémité en passant dans le premier échangeur de chaleur, le procédé comprenant, lorsque le circuit de soutirage ne réalise pas de soutirage de fluide vers la seconde extrémité aval, une étape de commutation de l'ensemble de vannes dans laquelle au moins une partie du volume interne du premier échangeur de chaleur de réchauffage est isolé fluidiquement d'au moins une partie du reste du circuit de soutirage pour favoriser une onde de pression dans le circuit de façon à générer de la chaleur qui pressurise le fluide dans le réservoir jusqu'à un niveau de pression déterminé et/ou une étape de commutation de l'ensemble de vannes dans laquelle au moins une partie du volume interne du premier échangeur de chaleur de réchauffage communique fluidiquement avec au moins une partie du reste du circuit de soutirage pour atténuer une éventuelle onde de pression dans le circuit de façon à limiter la génération de chaleur et la pressurisation du fluide dans le réservoir.

D'autres particularités et avantages apparaîtront à la lecture de la description ci-après, faite en référence aux figures dans lesquelles :

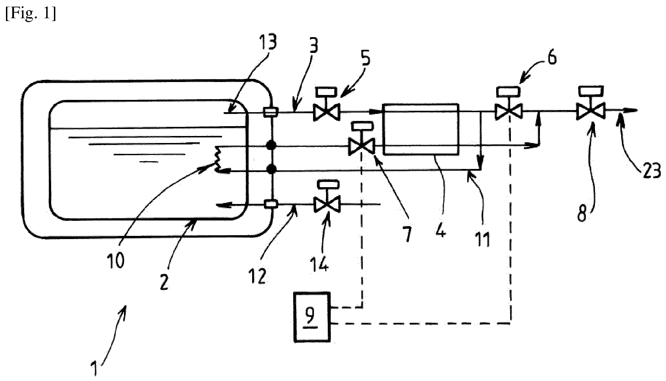

[Fig.1] représente une vue schématique et partielle illustrant un exemple de réalisation de la structure et du fonctionnement d'un dispositif selon l'invention.

### Description détaillée.

Le dispositif 1 de stockage et de fourniture de fluide illustré peut en particulier être un dispositif embarqué de stockage et de fourniture d'hydrogène dans un véhicule (bateau, avion, véhicule terrestre tel qu'un camion par exemple...).

Le dispositif 1 comprend un réservoir 2 cryogénique de stockage de fluide liquéfié et un circuit de soutirage.

Le réservoir 2 est par exemple un réservoir à double parois formant un espace d'isolation thermique isolé sous vide.

Le circuit de soutirage comprend une première conduite 3 de soutirage ayant une première extrémité 13 amont reliée à l'intérieur du réservoir 2 et une seconde extrémité 23 aval destinée à être reliée à un organe utilisateur.

Sans que ceci soit limitatif, la première extrémité 13 amont est par exemple reliée à la partie supérieure du réservoir 2 pour y soutirer du gaz.

La première conduite 3 de soutirage comprend un premier échangeur 4 de chaleur de réchauffage situé en dehors du réservoir 2 et un ensemble de vannes configuré pour autoriser ou non le soutirage d'un flux de fluide de la première 13 extrémité vers la seconde 23 extrémité en passant dans le premier échangeur 4. Le qualificatif « en dehors du réservoir » signifie par exemple que le premier échangeur 4 de chaleur n'est pas situé dans le volume de stockage du fluide cryogénique. Comme illustré, ce premier échangeur 4 de chaleur peut être situé en dehors du réservoir (en dehors de la seconde enveloppe) mais il pourrait être situé au moins en partie dans l'espace interparois.

L'ensemble de vannes comporte par exemple au moins une vanne (deux vannes 6, 8 dans cet exemple) d'isolation disposée en aval du premier échangeur 4 de chaleur et en amont d'un utilisateur recevant le fluide soutiré.
Comme illustré, dans cet exemple, et sans que ceci soit limitatif pour autant, la première conduite 3 de soutirage comprend un second échangeur (10) de chaleur de réchauffage situé à l'intérieur du réservoir 2 (dans le volume de stockage).
L'ensemble de vannes est configuré pour permettre d'assurer le passage d'un flux de fluide circulant de la première 13 extrémité vers la seconde 23 extrémité en passant dans le premier échangeur 4 de chaleur puis dans le second échangeur 10 de chaleur ou en passant uniquement dans le premier échangeur 4 de chaleur sans passer dans le second échangeur 10 de chaleur.
A cet effet, le circuit de soutirage peut comprendre une ligne principale s'étendant entre la première extrémité 13 amont et la seconde extrémité 23 aval et une branche 11 de dérivation de la ligne principale ayant deux extrémités raccordées à deux endroits distincts de la ligne principale, par exemple de part et d'autre d'une 6 des deux vannes d'isolation disposées en série.
De préférence, le premier échangeur 4 de chaleur comporte deux passages pour le fluide cryogénique soutiré à réchauffer : un premier passage pour le flux après sa sortie du réservoir 2 et un second passage pour le flux sortant du second échangeur 10 de chaleur. C'est-à-dire que le premier échangeur 4 de chaleur peut comporter deux entrées et deux sorties.
Comme représenté, la ligne principale du circuit de soutirage peut comporter une vanne 5 en amont d'une première entrée du premier échangeur 4 de chaleur et deux vannes 6, 8 en série après une première sortie de ce premier échangeur 4 de chaleur. Une autre vanne 7 est de préférence placée en amont de la deuxième entrée du premier échangeur 4 de chaleur.
Comme illustré, le dispositif 1 peut comporter une conduite 12 de remplissage distincte munie d'une vanne 14 et ayant une extrémité amont destinée à être reliée à une source de fluide et une extrémité aval débouchant dans la partie inférieure du réservoir 2 (et/ou dans la partie supérieure du réservoir). Par exemple, il peut être prévu une branche reliant la conduite 12 de remplissage à l'extrémité amont 13 de la conduite de soutirage pour remplir le réservoir par le haut " en pluie » ou par le bas « en source » ou pour soutirer en liquide ou en gaz le fluide consommé par l'utilisateur.

Tout ou partie des vannes peuvent être des vannes d'isolation commandées ou pilotées par un organe 9 électronique de contrôle et de commande de l'ouverture/fermeture des vannes. Cet organe de commande peut être intégré au dispositif 1 ou au moins en partie distant. L'organe 9 électronique de contrôle et de commande comprend par exemple un contrôleur, un microprocesseur ou un ordinateur programmable.

Lorsqu'il n'y a pas de soutirage (vanne 8 à l'extrémité aval de la ligne principale fermée par exemple), l'organe 9 électronique de contrôle et de commande peut être configuré pour commuter l'ensemble de vannes dans au moins deux états (ou configurations) distincts.

Dans un premier état, par exemple dit de « pressurisation », au moins une partie du volume interne du premier échangeur 4 de chaleur de réchauffage est isolé fluidiquement d'au moins une partie du reste du circuit de soutirage. C'est-à-dire que le circuit de soutirage est fermé et scindé ou compartimenté en différents tronçons qui ne communiquent pas fluidiquement entre eux.

Cette configuration favorise une onde de pression spontanée dans le circuit de soutirage qui génère de la chaleur et donc une pressurisation du fluide dans le réservoir 2. Cette onde de pression spontanée est le phénomène thermodynamique connu sous l'acronyme « TACONIS » ou « TAO » (« Thermal Acoustic Oscillations » c'est-à-dire « Oscillations acoustiques thermiques »).

Ainsi, si la vanne 6 située au niveau de la première sortie du premier échangeur 4 de chaleur est fermée, le phénomène TACONIS peut se développer : une onde de pression auto-entretenue est générée dans le circuit de soutirage entre le réservoir 2 et cette vanne 6 fermée. Le circuit peut être dimensionné spécialement pour que ce phénomène se développe (par exemple en dimensionnant le diamètre des tuyauteries et les longueurs des parties froide et chaude du circuit). Cette onde a une fréquence typiquement comprise entre 5 et 100 Hz que l'on peut calculer en fonction des conditions de fonctionnement et de la géométrie du circuit.

Pour supprimer ce phénomène cette vanne 6 peut être ouverte de manière à amortir l'onde de pression grâce au volume agrandi (décompartimenté) pour cette onde via l'ouverture de l'échangeur.

L'ensemble de vannes peut donc disposer le circuit dans un second état dans lequel au moins une partie du volume de l'échangeur 4 de chaleur de réchauffage communique fluidiquement avec au moins une partie du reste du circuit de soutirage. Ceci augmente le volume et notamment la longueur de la portion close du circuit qui génère les ondes et amortit et supprime une telle onde de pression dans le circuit. Dans ce second état, les entrées de chaleur sont minimisées.

C'est-à-dire qu'il est possible de générer ou non une puissance de réchauffage passive (sans appareil consommateur d'énergie, même lorsque du fluide n'est pas soutiré du réservoir 2 (ou sans que du fluide soit soutiré du réservoir 2.

En variante ou en combinaison, pour amortir cette onde, il pourrait être possible de prévoir une autre branche de circuit similaire à celle sur laquelle est installée ladite vanne 6 et de mettre ces deux branches en communication par ouverture de la vanne 6. Les deux branches seraient de préférence à la même hauteur dans le réservoir 2 pour ne pas avoir d'effet de recirculation par thermosiphon non souhaitée qui amènerait aussi de la chaleur pendant des phases d'attente.

Ainsi, la structure du dispositif 1 est configurée pour permettre de favoriser ou non le phénomène Taconis selon les besoins de pression dans le réservoir 2.

En variante, le premier état est obtenu en fermant deux vannes 6, 7 situées de part et d'autre du premier échangeur 4 de chaleur de réchauffage, par exemple la vanne 6 située au niveau de la première sortie et la vanne 7 située au niveau de la seconde entrée. Dans cette configuration un passage du premier échangeur 4 de chaleur est isolé du reste du circuit au niveau de ses deux extrémités. Le second état peut être obtenu en ouvrant ces deux mêmes vannes 6, 7. Dans cette configuration, un passage du premier échangeur 4 de chaleur communique fluidiquement avec le du reste du circuit au niveau de ses deux extrémités. Par exemple, le circuit forme une boucle de circulation fermée sur elle-même et incluant ce passage et dans laquelle une onde vibratoire peut être amortie.

Comme illustré, le second échangeur 10 de chaleur peut faire partie du reste du circuit de soutirage qui est isolé fluidiquement ou non du premier échangeur 4 de chaleur de réchauffage selon que l'ensemble de vannes est dans le premier état ou le second état.

Le dispositif 1 possède ainsi un système de pressurisation simple, efficace, peu coûteux.

Ceci peut générer sur demande une puissance de réchauffage dans le réservoir 2, typiquement de quelques dizaines à quelques centaines de Watt.

Cette solution est particulièrement avantageuse pour des réservoirs de relative petite taille (par exemple de quelques litres à quelques centaines de litres).

Le dispositif peut comporter en plus un système de pressurisation connu tel que décrit en introduction. En particulier, un système de maintien en pressurisation du réservoir supplémentaire peut être prévu pour fonctionner par exemple pendant la phase de soutirage de fluide (notamment si le système décrit ci-dessus n'est pas suffisant pour cet autre besoin). A noter que ce système additionnel de réchauffage n'est pas représenté par soucis de simplification.
Bien entendu, l'invention n'est pas limitée à l'exemple décrit ci-dessus. Ainsi, au lieu ou en plus de ce premier échangeur 4 de chaleur de réchauffage , il est possible d'utiliser tout ou partie du volume d'un autre échangeur de chaleur de réchauffage externe pour contrôler ce phénomène d'ondes, par exemple un échangeur d'un système de réchauffage et de pressurisation distinct par recirculation qui est utilisé lors du soutirage. L'invention permet ainsi de réaliser une pressurisation contrôlée même en dehors d'un soutirage de fluide du réservoir. L'invention peut s'appliquer à tout fluide cryogénique et notamment l'hydrogène ou l'hélium.
Lors d'un soutirage la première vanne 5 située en amont de la conduite 3 de soutirage est ouverte ainsi que la vannes 8 en aval de la conduite 3 (et l'une ou les deux vannes 6, 7 pour faire passer le flux ou non dans le second échangeur 10 de chaleur selon les besoins de pressurisation du réservoir 2). Lorsqu'il n'y a pas de soutirage les vannes amont 5 et aval 8 sont fermées, il n'y a pas de débit dans la conduite de soutirage. Dans cette situation l'une ou les deux vannes 6, 7 peuvent être commandées pour générer ou non le phénomène de vibration pour amener ou non de la chaleur et donc augmenter ou non la pression dans le réservoir 2 comme décrit ci-dessus. Ceci est obtenu sans soutirage de fluide du réservoir 2. Ceci permet de contrôler de manière fiable et répétable l'apparition de ce phénomène sans équipement additionnel.
Par exemple cette structure permet de générer à la demande une puissance de pré-pressurisation de l'ordre de 200 W pour pressuriser un réservoir d'hydrogène liquide d'une centaine de litres en quelques dizaines de minutes.

## Revendications

1. Dispositif de stockage et de fourniture de fluide, notamment dispositif embarqué de stockage et de fourniture d'hydrogène à un organe utilisateur, comprenant un réservoir (2) cryogénique de stockage de fluide liquéfié, un circuit de soutirage comprenant une première conduite (3) de soutirage ayant une première extrémité (13) amont reliée à l'intérieur du réservoir (2) et une seconde extrémité (23) aval destinée à être reliée à un organe utilisateur, la première conduite (3) de soutirage comprenant un premier échangeur (4) de chaleur de réchauffage situé en dehors du réservoir (2), le circuit de soutirage comprenant un ensemble de vanne(s) (5, 6, 7, 8) configuré pour autoriser ou non le soutirage d'un flux de fluide de la première (13) extrémité vers la seconde (23) extrémité en passant dans le premier échangeur (4) de chaleur, le dispositif comprenant un organe (9) électronique de contrôle et de commande de l'ouverture/fermeture d'au moins une partie de l'ensemble de vannes, **caractérisé en ce que**, lorsque l'ensemble de vannes (5, 6, 7, 8) est configuré pour ne pas autoriser de soutirage de fluide vers la seconde extrémité aval, l'organe (9) électronique de contrôle et de commande est configuré pour commuter l'ensemble de vannes (5, 6, 7, 8) dans au moins deux états distincts : dans un premier état, au moins une partie du volume interne du premier échangeur (4) de chaleur de réchauffage est isolé fluidiquement d'au moins une partie du reste du circuit de soutirage pour favoriser une onde de pression spontanée dans le circuit de soutirage de façon à pressuriser le fluide dans le réservoir (2), dans un second état, au moins une partie du volume de l'échangeur (4) de chaleur de réchauffage communique fluidiquement avec au moins une partie du reste du circuit de soutirage pour amortir une telle onde de pression dans le circuit.

2. Dispositif selon la revendication 1, **caractérisé en ce que** le passage du premier état vers le second état est obtenu par l'ouverture d'au moins une vanne (6, 7) de l'ensemble de vannes.

3. Dispositif selon la revendication 1 ou 2, **caractérisé en ce que** le passage du second état vers le premier état est obtenu par la fermeture d'au moins une vanne (6, 7) de l'ensemble de vannes.

4. Dispositif selon l'une quelconque des revendication 1 à 3, **caractérisé en ce que** le passage du premier état vers le second, respectivement du second état vers le premier état, est obtenu par l'ouverture, respectivement la fermeture, de deux vannes (6, 7) d'isolation de l'ensemble de vannes qui sont situées respectivement à deux extrémités du premier échangeur (4) de chaleur.

5. Dispositif selon la revendication 4, **caractérisé en ce que**, dans le premier état, au moins un passage interne du premier échangeur (4) situé entre une entrée et une sortie de l'échangeur (4) est mis en relation fluidique avec un ensemble de tuyauterie du circuit de soutirage et **en ce que**, dans le second état, ledit passage interne du premier échangeur (4) est isolé fluidiquement dudit ensemble de tuyauterie du circuit de soutirage.

6. Dispositif selon l'une quelconque des revendications 1 à 5, **caractérisé en ce que** la première conduite (3) de soutirage comprend un second échangeur (10) de chaleur de réchauffage situé à l'intérieur du réservoir (2), l'ensemble de vanne(s) étant configuré pour assurer le passage d'un flux de fluide circulant de la première (13) extrémité vers la seconde (23) extrémité en passant dans le premier échangeur (4) de chaleur puis dans le second échangeur (10) de chaleur ou en passant uniquement dans le premier échangeur (4) de chaleur sans passer dans le second échangeur (10) de chaleur.

7. Dispositif selon la revendication 6, **caractérisé en ce que** le second échangeur (10) de chaleur fait partie du reste du circuit de soutirage qui est isolé fluidiquement ou non du premier échangeur (4) de chaleur de réchauffage selon que l'ensemble de vanne(s) est dans le premier état ou le second état.

8. Dispositif selon l'une quelconque des revendications 1 à 7, **caractérisé en ce que**, dans le premier état, le circuit de soutirage comprend une portion formant une boucle de circulation de fluide tandis que dans le second état le circuit de soutirage ne comprend pas de portion formant une boucle de circulation de fluide.

9. Dispositif selon l'une quelconque des revendications 1 à 8, **caractérisé en ce que** le circuit de soutirage (3) comprend une ligne principale s'étendant entre la première extrémité (13) amont et la seconde extrémité (23) aval et une branche (11) de dérivation de la ligne principale ayant deux extrémités raccordées à deux endroits distincts de la ligne principale.

10. Dispositif selon l'une quelconque des revendications 1 à 9, **caractérisé en ce que** la première extrémité (13) amont est reliée à la partie supérieure du réservoir (2).

11. Dispositif selon l'une quelconque des revendications 1 à 10, **caractérisé en ce que** de l'ensemble de vanne(s) (5, 6, 7, 8) comprend au moins l'un parmi : une ou plusieurs vannes d'isolation, une ou plusieurs vannes à trois voies.

12. Véhicule, notamment bateau ou avion comprenant un dispositif selon l'une quelconque des revendications 1 à 11.

13. Procédé de stockage d'un fluide cryogénique, par exemple de l'hydrogène liquide, dans un dispositif de stockage et de fourniture de fluide comprenant un réservoir (2) de fluide cryogénique liquéfié, un circuit de soutirage comprenant une première conduite (3) de soutirage ayant une première extrémité (13) amont reliée à l'intérieur du réservoir (2) et une seconde extrémité (23) aval destinée à être reliée à un organe utilisateur, la première conduite (3) de soutirage comprenant un premier échangeur (4) de chaleur de réchauffage situé en dehors du réservoir (2), le circuit de soutirage comprenant un ensemble de vanne(s) (5, 6, 7, 8) configuré pour réaliser ou non le soutirage d'un flux de fluide de la première (13) extrémité vers la seconde (23) extrémité en passant dans le premier échangeur (4) de chaleur, le procédé comprenant, lorsque le circuit de soutirage ne réalise pas de soutirage de fluide vers la seconde extrémité aval, une étape de commutation de l'ensemble de vannes (5, 6, 7, 8) dans laquelle au moins une partie du volume interne du premier échangeur (4) de chaleur de réchauffage est isolé fluidiquement d'au moins une partie du reste du circuit de soutirage pour favoriser une onde de pression dans le circuit de façon à générer de la chaleur qui pressurise le fluide dans le réservoir jusqu'à un niveau de pression déterminé et/ou une étape de commutation de l'ensemble de vannes (5, 6, 7, 8) dans laquelle au moins une partie du volume interne du premier échangeur (4) de chaleur de réchauffage communique fluidiquement avec au moins une partie du reste du circuit de soutirage pour atténuer une éventuelle onde de pression dans le circuit de façon à limiter la génération de chaleur et la pressurisation du fluide dans le réservoir.

## Patentansprüche

1. Vorrichtung zum Speichern und Bereitstellen eines Fluids, insbesondere eine Bordvorrichtung zum Speichern und Bereitstellen von Wasserstoff für ein Benutzerorgan, umfassend einen kryogenen Behälter (2) zum Speichern von verflüssigtem Fluid, einen Entnahmekreislauf, der eine erste Entnahmeleitung (3) mit einem ersten stromaufwärtigen Ende (13), das mit dem Inneren des Behälters (2) verbunden ist, und einem zweiten stromabwärtigen Ende (23), das dazu bestimmt ist, mit einem Benutzerorgan verbunden zu werden, aufweist, wobei die erste Entnahmeleitung (3) einen ersten Wiedererwärmungs-Wärmetauscher (4) umfasst, der sich außerhalb des Behälters (2) befindet, wobei der Entnahmekreislauf eine Gesamtheit von Ventil(en) (5, 6, 7, 8) umfasst, die so konfiguriert ist, dass sie die Entnahme eines Fluidstroms vom ersten Ende (13) zum zweiten Ende (23) durch den ersten Wärmetauscher (4) hindurch gestattet oder nicht, wobei die Vorrichtung ein elektronisches Steuer- und Regelorgan (9) für das Öffnen/Schließen von mindestens einem Teil der Ventilgesamtheit umfasst, **dadurch gekennzeichnet, dass**, wenn die Ventilgesamtheit (5, 6, 7, 8) so konfiguriert ist, dass sie keine Fluid-Entnahme zum zweiten stromabwärtigen Ende gestattet, das elektronische Steuer- und Regelorgan (9) so konfiguriert ist, dass es die Ventilgesamtheit (5, 6, 7, 8) in mindestens zwei verschiedene Zustände schaltet: in einem ersten Zustand ist mindestens ein Teil des Innenvolumens des ersten Wiedererwärmungs-Wärmetauschers (4) fluidisch von mindestens einem Teil des restlichen Entnahmekreislaufs isoliert, um eine spontane Druckwelle im Entnahmekreislauf zu fördern, um das Fluid im Behälter (2) unter Druck zu setzen, in einem zweiten Zustand kommuniziert mindestens ein Teil des Volumens des Wiedererwärmungs-Wärmetauschers (4) fluidisch mit mindestens einem Teil des restlichen Entnahmekreislaufs, um eine solche Druckwelle im Kreislauf zu dämpfen.

2. Vorrichtung nach Anspruch 1, **dadurch gekennzeichnet, dass** der Übergang vom ersten Zustand in den zweiten Zustand durch das Öffnen von mindestens einem Ventil (6, 7) der Ventilgesamtheit erreicht wird.

3. Vorrichtung nach Anspruch 1 oder 2, **dadurch gekennzeichnet, dass** der Übergang vom zweiten Zustand in den ersten Zustand durch das Schließen von mindestens einem Ventil (6, 7) der Ventilgesamtheit erreicht wird.

4. Vorrichtung nach einem der Ansprüche 1 bis 3, **dadurch gekennzeichnet, dass** der Übergang vom ersten Zustand in den zweiten Zustand bzw. vom zweiten Zustand in den ersten Zustand durch das Öffnen bzw. Schließen von zwei Absperrventilen (6, 7) der Ventilgesamtheit erreicht wird, die sich jeweils an zwei Enden des ersten Wärmetauschers (4) befinden.

5. Vorrichtung nach Anspruch 4, **dadurch gekennzeichnet, dass** im ersten Zustand mindestens ein interner Durchgang des ersten Wärmetauschers (4), der sich zwischen einem Einlass und einem Auslass des Wärmetauschers (4) befindet, in fluidische Verbindung mit einer Gesamtheit von Rohrleitungen des Entnahmekreislaufs gebracht wird und dass im zweiten Zustand der genannte interne Durchgang des ersten Wärmetauschers (4) fluidisch von der genannten Gesamtheit von Rohrleitungen des Entnahmekreislaufs isoliert ist.

6. Vorrichtung nach einem der Ansprüche 1 bis 5, **dadurch gekennzeichnet, dass** die erste Entnahmeleitung (3) einen zweiten Wiedererwärmungs-Wärmetauscher (10) umfasst, der sich im Inneren des Behälters (2) befindet, wobei die Gesamtheit der Ventile so konfiguriert ist, dass sie den Durchgang eines Fluidstroms sicherstellt, der vom ersten Ende (13) zum zweiten Ende (23) zirkuliert, indem er durch den ersten Wärmetauscher (4) und dann durch den zweiten Wärmetauscher (10) fließt oder indem er nur durch den ersten Wärmetauscher (4) fließt, ohne durch den zweiten Wärmetauscher (10) zu fließen.

7. Vorrichtung nach Anspruch 6, **dadurch gekennzeichnet, dass** der zweite Wärmetauscher (10) Teil des restlichen Entnahmekreislaufs ist, der je nachdem, ob sich die Gesamtheit der Ventile im ersten oder zweiten Zustand befindet, fluidisch vom ersten Wiedererwärmungs-Wärmetauscher (4) isoliert ist oder nicht.

8. Vorrichtung nach einem der Ansprüche 1 bis 7, **dadurch gekennzeichnet, dass** im ersten Zustand der Entnahmekreislauf einen Abschnitt umfasst, der eine Fluidzirkulationsschleife bildet, während im zweiten Zustand der Entnahmekreislauf keinen Abschnitt umfasst, der eine Fluidzirkulationsschleife bildet.

9. Vorrichtung nach einem der Ansprüche 1 bis 8, **dadurch gekennzeichnet, dass** der Entnahmekreislauf (3) eine Hauptleitung umfasst, die sich zwischen dem ersten stromaufwärtigen Ende (13) und dem zweiten stromabwärtigen Ende (23) erstreckt, sowie einen Abzweig (11) von der Hauptleitung, der zwei Enden aufweist, die an zwei verschiedenen Stellen der Hauptleitung angeschlossen sind.

10. Vorrichtung nach einem der Ansprüche 1 bis 9, **dadurch gekennzeichnet, dass** das erste stromaufwärtige Ende (13) mit dem oberen Teil des Behälters (2) verbunden ist.

11. Vorrichtung nach einem der Ansprüche 1 bis 10, **dadurch gekennzeichnet, dass** die Gesamtheit der Ventile (5, 6, 7, 8) mindestens eines von: einem oder mehreren Absperrventilen, einem oder mehreren Dreiwegeventilen umfasst.

12. Fahrzeug, insbesondere ein Boot oder ein Flugzeug, das eine Vorrichtung nach einem der Ansprüche 1 bis 11 umfasst.

13. Verfahren zum Speichern eines kryogenen Fluids, beispielsweise flüssigen Wasserstoffs, in einer Vorrichtung zum Speichern und Bereitstellen von Fluid, umfassend einen Behälter (2) für verflüssigtes kryogenes Fluid, einen Entnahmekreislauf mit einer ersten Entnahmeleitung (3), die ein erstes stromaufwärtiges Ende (13) aufweist, das mit dem Inneren des Behälters (2) verbunden ist, und ein zweites stromabwärtiges Ende (23), das zur Verbindung mit einem Benutzerorgan bestimmt ist, wobei die erste Entnahmeleitung (3) einen ersten Wiedererwärmungs-Wärmetauscher (4) umfasst, der sich außerhalb des Behälters (2) befindet, wobei der Entnahmekreislauf eine Gesamtheit von Ventilen (5, 6, 7, 8) umfasst, die so konfiguriert sind, dass sie die Entnahme eines Fluidstroms vom ersten Ende (13) zum zweiten Ende (23) durch den ersten Wärmetauscher (4) durchführen oder nicht, wobei das Verfahren, wenn der Entnahmekreislauf keine Fluid-Entnahme zum zweiten stromabwärtigen Ende durchführt, einen Schritt des Umschaltens der Ventilgesamtheit (5, 6, 7, 8) umfasst, bei dem mindestens ein Teil des Innenvolumens des ersten Wiedererwärmungs-Wärmetauschers (4) fluidisch von mindestens einem Teil des restlichen Entnahmekreislaufs isoliert wird, um eine Druckwelle im Kreislauf zu fördern, um Wärme zu erzeugen, die das Fluid im Behälter bis zu einem bestimmten Druckniveau unter Druck setzt, und/oder einen Schritt des Umschaltens der Ventilgesamtheit (5, 6, 7, 8), bei dem mindestens ein Teil des Innenvolumens des ersten Wiedererwärmungs-Wärmetauschers (4) fluidisch mit mindestens einem Teil des restlichen Entnahmekreislaufs kommuniziert, um eine eventuelle Druckwelle im Kreislauf zu dämpfen, um die Wärmeerzeugung und die Druckbeaufschlagung des Fluids im Behälter zu begrenzen.

## Claims

1. A device for storing and supplying fluid, particularly an onboard device for storing and supplying hydrogen to a user unit, comprising a cryogenic reservoir (2) for storing liquefied fluid, a withdrawal circuit comprising a first withdrawal conduit (3) having a first upstream end (13) connected to the inside of the reservoir (2) and a second downstream end (23) intended to be connected to a user unit, the first withdrawal conduit (3) comprising a first reheating heat exchanger (4) located outside the reservoir (2), the withdrawal circuit comprising a set of valve(s) (5, 6, 7, 8) configured to authorize or not the withdrawal of a fluid flow from the first end (13) to the second end (23) by passing through the first heat exchanger (4), the device comprising an electronic control and command unit (9) for the opening/closing of at least a part of the set of valves, **characterized in that**, when the set of valves (5, 6, 7, 8) is configured not to authorize the withdrawal of fluid towards the second downstream end, the electronic control and command unit (9) is configured to switch the set of valves (5, 6, 7, 8) into at least two distinct states: in a first state, at least a portion of the internal volume of the first reheating heat exchanger (4) is fluidically isolated from at least a portion of the rest of the withdrawal circuit to promote a spontaneous pressure wave in the withdrawal circuit so as to pressurize the fluid in the reservoir (2), in a second state, at least a portion of the volume of the reheating heat exchanger (4) communicates fluidically with at least a portion of the rest of the withdrawal circuit to dampen such a pressure wave in the circuit.

2. The device according to claim 1, **characterized in that** the passage from the first state to the second state is obtained by the opening of at least one valve (6, 7) of the set of valves.

3. The device according to claim 1 or 2, **characterized in that** the passage from the second state to the first state is obtained by the closing of at least one valve (6, 7) of the set of valves.

4. The device according to any one of claims 1 to 3, **characterized in that** the passage from the first state to the second, respectively from the second state to the first state, is obtained by the opening, respectively the closing, of two isolation valves (6, 7) of the set of valves which are respectively located at two ends of the first heat exchanger (4).

5. The device according to claim 4, **characterized in that**, in the first state, at least one internal passage of the first heat exchanger (4) located between an inlet and an outlet of the exchanger (4) is placed in fluidic communication with a set of piping of the withdrawal circuit and **in that**, in the second state, said internal passage of the first heat exchanger (4) is fluidically isolated from said set of piping of the withdrawal circuit.

6. The device according to any one of claims 1 to 5, **characterized in that** the first withdrawal conduit (3) comprises a second reheating heat exchanger (10) located inside the reservoir (2), the set of valve(s) being configured to ensure the passage of a flow of fluid circulating from the first end (13) to the second end (23) by passing through the first heat exchanger (4) then in the second heat exchanger (10) or by passing only through the first heat exchanger (4) without passing through the second heat exchanger (10).

7. The device according to claim 6, **characterized in that** the second heat exchanger (10) is part of the rest of the withdrawal circuit which is fluidically isolated or not from the first reheating heat exchanger (4) depending on whether the set of valve(s) is in the first state or the second state.

8. The device according to any one of claims 1 to 7, **characterized in that**, in the first state, the withdrawal circuit comprises a portion forming a fluid circulation loop whereas in the second state the withdrawal circuit does not comprise a portion forming a fluid circulation loop.

9. The device according to any one of claims 1 to 8, **characterized in that** the withdrawal circuit (3) comprises a main line extending between the first upstream end (13) and the second downstream end (23) and a branch (11) branching from the main line having two ends connected at two distinct locations of the main line.

10. The device according to any one of claims 1 to 9, **characterized in that** the first upstream end (13) is connected to the upper part of the reservoir (2).

11. The device according to any one of claims 1 to 10, **characterized in that** the set of valve(s) (5, 6, 7, 8) comprises at least one from among: one or more isolation valves, one or more three-way valves.

12. A vehicle, particularly a boat or an airplane, comprising a device according to any one of claims 1 to 11.

13. A method for storing a cryogenic fluid, for example liquid hydrogen, in a device for storing and supplying fluid comprising a reservoir (2) of liquefied cryogenic fluid, a withdrawal circuit comprising a first withdrawal conduit (3) having a first upstream end (13) connected to the inside of the reservoir (2) and a second downstream end (23) intended to be connected to a user unit, the first withdrawal conduit (3) comprising a first reheating heat exchanger (4) located outside the reservoir (2), the withdrawal circuit comprising a set of valve(s) (5, 6, 7, 8) configured to perform or not the withdrawal of a fluid flow from the first end (13) to the second end (23) by passing through the first heat exchanger (4), the method comprising, when the withdrawal circuit does not perform a withdrawal of fluid towards the second downstream end, a step of switching the set of valves (5, 6, 7, 8) in which at least a portion of the internal volume of the first reheating heat exchanger (4) is fluidically isolated from at least a portion of the rest of the withdrawal circuit to promote a pressure wave in the circuit so as to generate heat which pressurizes the fluid in the reservoir up to a determined pressure level and/or a step of switching the set of valves (5, 6, 7, 8) in which at least a portion of the internal volume of the first reheating heat exchanger (4) communicates fluidically with at least a portion of the rest of the withdrawal circuit to attenuate a possible pressure wave in the circuit so as to limit the generation of heat and the pressurization of the fluid in the reservoir.
